# EUROPEAN PATENT APPLICATION

(11) **EP 4 734 498 A1**
(43) Date of publication of application: **29.04.2026**
(21) Application number: 25209730.8
(22) Date of filing: 20.10.2025
(51) Int. Cl.: H04N 1/00, G03G 15/00, G06F 3/12

(54) **DISPLAY CONTROL METHOD, IMAGE FORMING APPARATUS, AND INFORMATION PROCESSING APPARATUS**

(30) Priority: 22.10.2024 JP 2024185758
(71) Applicant: KYOCERA Document Solutions Inc., Osaka-shi, Osaka 540-8585 (JP)
(72) Inventor: Matsuo, Yumeka, Osaka-shi, 540-8585 (JP)
(74) Representative: Plougmann Vingtoft a/s

(57) **Abstract**

A processor (51) causes a display device (3b) to display a graph image (G2) in which a plurality of graph elements (G21), each of which represents data of an operation status of a target device, are arranged. The processor (51) causes a target data image (G4) including text relating to the data of the operation status corresponding to a target graph element (G21x) to be displayed at a position corresponding to the target graph element (G21x) in a specific area (A1). When a drag operation for moving the target data image (G4) is detected, the processor (51) changes the display position of the target data image (G4) in a direction of the drag operation. The processor (51) changes the target graph element (G21x) and changes the display of the target data image (G4) in accordance with the change in the display position of the target data image (G4).

## Description

### INCORPORATION BY REFERENCE

This application is based upon and claims the benefit of priority from the corresponding Japanese Patent Application No. 2024-185758 filed on October 22, 2024, the entire contents of which are incorporated herein by reference.

### BACKGROUND

The present disclosure relates to a display control method for causing a display device to display a graph image, an image forming apparatus, and an information processing apparatus.

The image forming apparatus may have a function of deriving data of an operation status, such as power consumption or developer consumption.

For example, it is known that the image forming apparatus derives data of power consumption and developer consumption of the image forming apparatus itself, and further derives data on greenhouse gas emissions based on the results of deriving these data.

The data of each of the power consumption, the developer consumption, and the greenhouse gas emissions is an example of the data of the operation status of the image forming apparatus.

### SUMMARY

A display control method according to an aspect of the present disclosure is a method for controlling display of a display device capable of displaying an image in a target device including the display device and an operation device for detecting an operation. The display control method includes a processor causing the display device to display a graph image in which a plurality of graph elements, each of which is an image representing data of an operation status of the target device, are arranged. The display control method further includes the processor causing a target data image including text relating to the data of the operation status corresponding to a target graph element selected from the plurality of graph elements to be displayed at a position corresponding to the target graph element in a specific area which is a part of an entire display area of the display device. The display control method further includes, when a drag operation for moving the target data image in the specific area along an arrangement direction of the plurality of graph elements is detected by the operation device, the processor changing the display position of the target data image in the specific area in a direction of the drag operation. The display control method further includes the processor changing the target graph element to one of the plurality of graph elements corresponding to the display position of the target data image in accordance with the change in the display position of the target data image, and changing a display of the target data image to a display corresponding to the target graph element after the change.

An image forming apparatus according to another aspect of the present disclosure includes a printing device configured to form an image on a sheet; the display device; the operation device; and the processor configured to implement the display control method. The processor causes the display device to display an image representing an operation status of a target device including the printing device.

An image forming apparatus according to another aspect of the present disclosure includes the display device, the operation device, and the processor configured to implement the display control method.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 is a block diagram showing a configuration of an image forming apparatus according to an embodiment.
FIG. 2 is a flowchart showing an example of a procedure of operation status display control in the image forming apparatus according to the embodiment.
FIG. 3 shows an example of an operation status presentation screen in an initial state displayed on the image forming apparatus according to the embodiment.
FIG. 4 shows an example of the operation status presentation screen during a tool tip movement, which is displayed on the image forming apparatus according to the embodiment.
FIG. 5 shows a first modification of the operation status presentation screen.

### DETAILED DESCRIPTION

Hereinafter, an embodiment of the present disclosure will be described with reference to the drawings. It is noted that the following embodiment is an example of embodying the present disclosure and does not limit the technical scope of the present disclosure.

### [Configuration of Image Forming Apparatus 10]

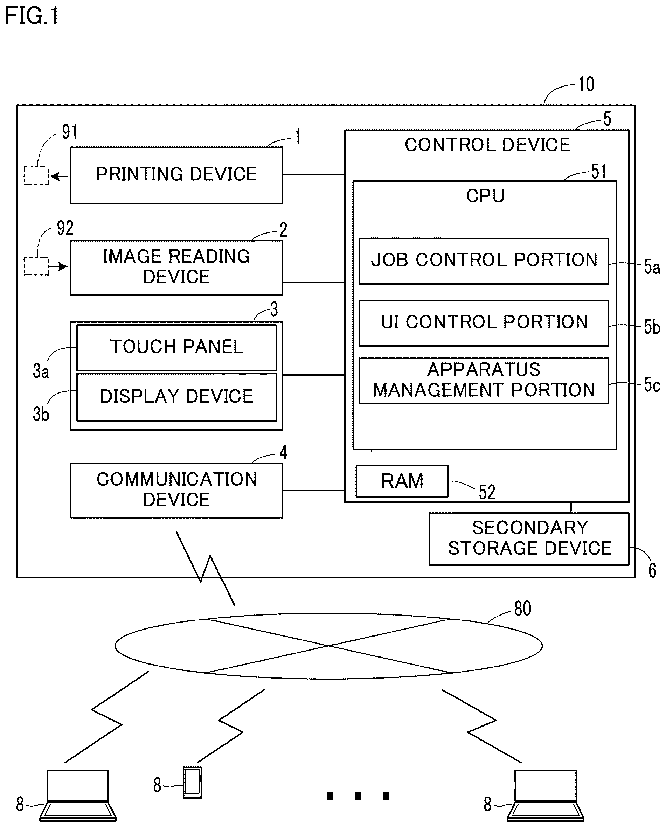

An image forming apparatus 10 according to an embodiment includes a printing device 1 that performs print processing and a user interface device 3 (see FIG. 1).

The print processing is processing for forming an image on a sheet 91. For example, the image forming apparatus 10 is a printer, a copier, a facsimile machine, a multifunction peripheral, or the like.

The user interface device 3 includes a touch panel 3a that detects a touch operation and a display device 3b capable of displaying an image. The touch panel 3a is located on the screen of the display device 3b.

The touch panel 3a is an example of an operation device that detects an operation. The image forming apparatus 10 is an example of a target device or an information processing apparatus including the operation device and the display device 3b.

In the example shown in FIG. 1, the image forming apparatus 10 includes a printing device 1, an image reading device 2, a user interface device 3, a communication device 4, a control device 5, and a secondary storage device 6.

The image forming apparatus 10 is capable of communicating with other apparatuses such as a host apparatus 8 through a network 80. The network 80 includes a local area network (LAN), the Internet, and the like. The host apparatus 8 is an information processing apparatus such as a personal computer, a tablet computer, or a smartphone.

The printing device 1 executes the print processing using an electrophotographic method or an inkjet method. The printing device 1 includes a sheet conveying mechanism that conveys a sheet 91, and an image forming portion that forms an image on the conveyed sheet 91.

The image reading device 2 executes image reading processing. The image reading processing is processing for reading an image from a document sheet 92. The image reading device 2 includes a laser scanning mechanism that scans the document sheet 92 with light, and an image sensor that receives reflected light from the document sheet 92.

The image sensor outputs data of a read image. The read image is an image read from the document sheet 92.

The communication device 4 is a communication interface device that performs communication with another apparatus such as the host apparatus 8 through the network 80. The control device 5 performs all transmissions and receptions of data to and from the other apparatuses through the communication device 4.

The printing device 1 executes the print processing based on the data of the read image or received print data. The received print data is data included in a print request received from the host apparatus 8 through the communication device 4.

The communication device 4 is also capable of executing image transmission processing. The image transmission processing is processing for transmitting the data of the read image to a designated destination through the network 80. In the present embodiment, the image transmission processing includes network facsimile transmission processing for transmitting the data of the read image through the network 80.

The control device 5 executes various types of arithmetic processing, data processing, and control on various electronic devices included in the image forming apparatus 10. Further, the control device 5 controls the display device 3b to control the display of the display device 3b.

The control device 5 includes a CPU 51 and a random access memory (RAM) 52. The CPU 51 is a processor that executes various types of data processing and control by executing computer programs.

It is also conceivable that another processor, such as a DSP, executes the data processing and control instead of the CPU 51.

The RAM 52 is a computer-readable volatile storage device. The RAM 52 temporarily stores the computer programs to be executed by the CPU 51 and data output and referred to in the process of the CPU 51 executing the programs.

The secondary storage device 6 is a computer-readable nonvolatile storage device. The secondary storage device 6 can store computer programs and various types of data. For example, one or both of a solid state drive (SSD) and a hard disk drive are employed as the secondary storage device 6.

The secondary storage device 6 stores the computer programs executed by the CPU 51 and data referred to by the CPU 51. The CPU 51 is an example of the processor.

The image forming apparatus 10 can execute data recording processing for recording the data of the read image obtained by the image reading device 2 or the received print data obtained through the communication device 4 in the secondary storage device 6.

The CPU 51 includes a plurality of processing modules implemented by executing the computer programs. The plurality of processing modules include a job control portion 5a, a UI control portion 5b, an apparatus management portion 5c, and the like.

The job control portion 5a executes job control. The job control is processing for causing each device of the image forming apparatus 10 to execute image processing corresponding to a request input through the touch panel 3a or the communication device 4.

The job control portion 5a controls the printing device 1, the image reading device 2, the communication device 4, and the like. The job control portion 5a causes some or all of the printing device 1, the image reading device 2, and the communication device 4 to execute the requested image processing.

The image processing includes the print processing, the image reading processing, the image transmission processing, and the data recording processing.

The apparatus management portion 5c determines various states of the image forming apparatus 10, and controls the operation status of the image forming apparatus 10 in accordance with the determination result. Further, the apparatus management portion 5c derives and records data of an operation status of the image forming apparatus 10 including the printing device 1.

For example, the apparatus management portion 5c determines whether or not an idle condition is satisfied, and when the idle condition is satisfied, the apparatus management portion 5c shifts the image forming apparatus 10 from a normal mode to a power saving mode, in which the power consumption is smaller than in the normal mode.

In addition, the apparatus management portion 5c derives the hourly, daily, and monthly power consumptions of the image forming apparatus 10 based on the detection result of the power detection circuit (not shown), and records power consumption data representing the derivation results of the power consumptions in the secondary storage device 6.

Further, the apparatus management portion 5c derives the hourly, daily, and monthly consumables consumption, and records consumables consumption data representing the derivation results of the consumables consumptions in the secondary storage device 6. For example, the consumables consumption includes the consumption of the developer consumed in the print processing and the number of sheets 91 used.

Further, the apparatus management portion 5c converts the power consumption and the consumables consumption into the greenhouse gas emissions, and records hourly, daily, and monthly greenhouse gas conversion data in the secondary storage device 6. For example, the greenhouse gas is carbon dioxide or the like.

Each of the power consumption data, the consumables consumption data, and the greenhouse gas conversion data is an example of the data on the operation status of the image forming apparatus 10.

By the way, the UI control portion 5b causes the display device 3b to display various types of information relating to the image forming apparatus 10. In the image forming apparatus 10, it is desirable that the data of the operation status having a large amount of information can be displayed in a limited display area of the display device 3b in an easily understandable manner.

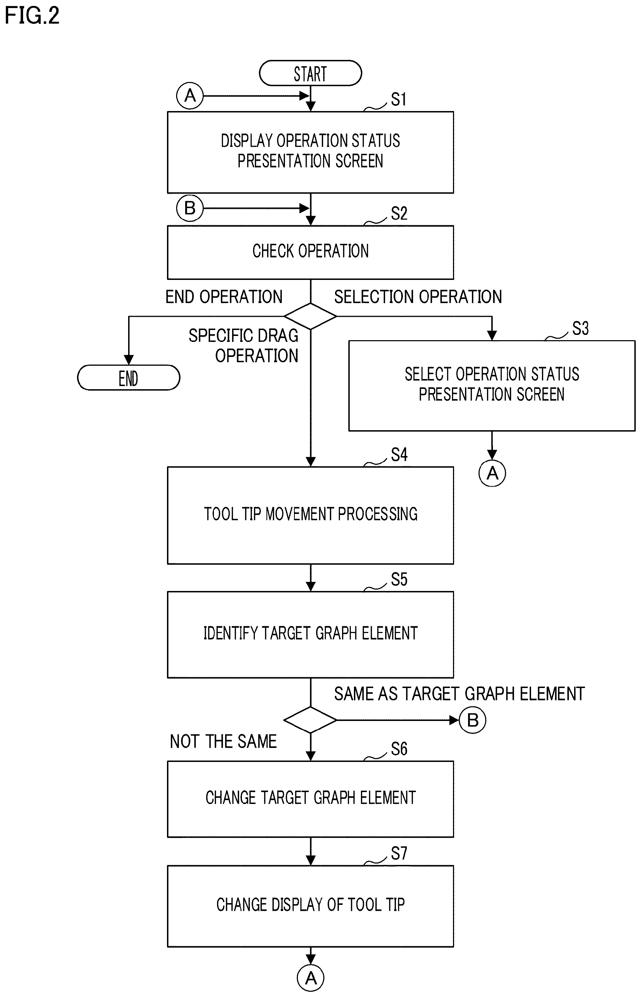

The UI control portion 5b executes operation status display control to be described later (see FIG. 2). The operation status display control is a control for causing the display device 3b to display the data of the operation status. The operation status display control includes processing for displaying the data of the operation status in a limited display area of the display device 3b in an easily understandable manner.

The UI control portion 5b causes the display device 3b to display a menu screen including a plurality of operation icons, and causes the display device 3b to display a screen corresponding to an operation of selecting one of the plurality of operation icons. The operation of selecting one of the plurality of operation icons is detected by the touch panel 3a.

The UI control portion 5b executes the operation status display control when an operation of selecting a specific icon among the plurality of operation icons is detected. The specific icon is an icon for receiving an operation of giving an instruction to display a graph of the data of the operation status of the image forming apparatus 10.

### [Operation Status Display Control]

An example of the procedure of the operation status display control will be described below with reference to the flowchart shown in FIG. 2.

The operation status display control is an example of processing for implementing a display control method for controlling the display of the display device 3b. The CPU 51, which includes the UI control portion 5b, is an example of the processor that implements the display control method.

In the following description, S1, S2, ... represent identification codes of a plurality of steps in the operation status display control. In the operation status display control, the process of step S1 is executed first.

### <Step S1>

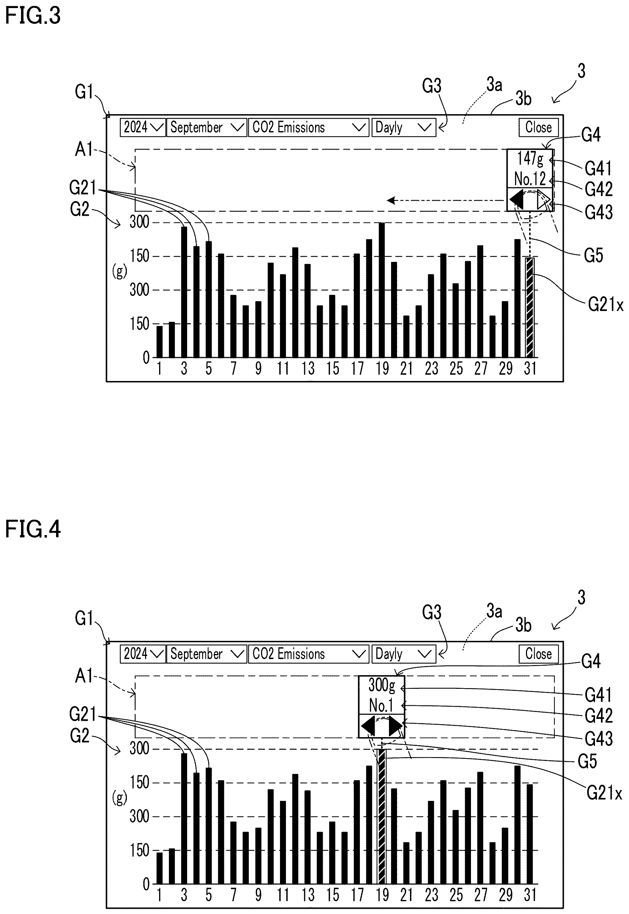

In step S1, the UI control portion 5b causes the display device 3b to display an operation status presentation screen G1 (see FIG. 3).

The operation status presentation screen G1 includes a graph image G2 in which a plurality of graph elements G21 are arranged (see FIG. 3). Each of the plurality of graph elements G21 is an image representing the data of the operation status of the image forming apparatus 10. In the example shown in FIG. 3, the graph image G2 is an image of a bar graph.

In the example shown in FIG. 3, the operation status presentation screen G1 further includes a selection menu G3 for receiving an operation of selecting a type of the data of the operation status displayed as the graph image G2.

In the present embodiment, the operation status presentation screen G1 includes a graph image G2 and a tool tip G4 including text relating to the data of the operation status (see FIG. 3). The tool tip G4 includes text corresponding to a target graph element G21x selected from the plurality of graph elements G21.

In the example shown in FIG. 3, the tool tip G4 includes a value text G41 and a rank text G42 corresponding to the target graph element G21x.

The value text G41 is text representing a value of the data of the operation status corresponding to the target graph element G21x. The rank text G42 is text representing the rank of the value of the data corresponding to the target graph element G21x among a plurality of values of the data of the operation statuses corresponding to the plurality of graph elements G21.

It is noted that the UI control portion 5b may cause the display device 3b to display the tool tip G4 including target attribute text. The target attribute text is text representing data corresponding to the target graph element G21x among a plurality of attribute data corresponding to the plurality of graph elements G21.

In the example shown in FIG. 3, the plurality of attribute data corresponding to the plurality of graph elements G21 are data of a plurality of days in a predetermined year and month.

The UI control portion 5b causes the display device 3b to display a tool tip G4 including some of all of the value text G41, the rank text G42, and the target attribute text corresponding to the target graph element G21x.

When the initial operation status presentation screen G1 is displayed on the display device 3b, the UI control portion 5b selects a predetermined one of the plurality of graph elements G21 as the target graph element G21x.

The text included in the tool tip G4 includes some or all of the following: letters, numbers and symbols. The tool tip G4 is an example of the target data image including text corresponding to the target graph element G21x.

When the UI control portion 5b causes the display device 3b to display the operation status presentation screen G1, the UI control portion 5b causes the display device 3b to display the target graph element G21x among the plurality of graph elements G21 in an emphasized manner (see FIG. 3).

For example, the target graph element G21x is emphasized by displaying it in a different color, blinking, with a specific pattern, or the like.

The UI control portion 5b causes the tool tip G4 to be displayed at a position corresponding to the target graph element G21x in a specific area A1, which is a part of the entire display area of the display device 3b (see FIG. 3 and FIG. 4). In the present embodiment, the specific area A1 is an area outside the display area of the graph image G2. In addition, the tool tip G4 is displayed at a position overlapping the target graph element G21x in the arrangement direction of the plurality of graph elements G21.

In the examples shown in FIG. 3 and FIG. 4, the graph image G2 is a graph in which the X axis represents attributes of data corresponding to the plurality of graph elements G21 and the Y axis represents values of data corresponding to the plurality of graph elements G21. The specific area A1 is an area extending along the X-axis direction outside the graph image G2 in the Y-axis direction.

The X-axis direction of the graph image G2 is the arrangement direction of the plurality of graph elements G21. In the example shown in FIG. 3, the X-axis direction of the graph image G2 is the horizontal direction of the screen of the display device 3b. It is noted that the X-axis direction of the graph image G2 may be the vertical direction of the screen of the display device 3b.

When the UI control portion 5b causes the display device 3b to display the operation status presentation screen G1, the UI control portion 5b causes the display device 3b to display a line image G5 that associates the tool tip G4 with the target graph element G21x (see FIG. 3).

The UI control portion 5b causes the display device 3b to display a tool tip G4 including a direction display mark G43 indicating that the tool tip G4 can be dragged along the arrangement direction (see FIG. 3).

The UI control portion 5b executes the process of step S2 following the process of step S1.

### <Step S2>

In step S2, the UI control portion 5b checks the operation detected by the touch panel 3a, and selects the next process in accordance with the detected operation.

The UI control portion 5b executes the process of step S3 when a selection operation on the selection menu G3 is detected. In addition, when a predetermined end operation is detected, the UI control portion 5b ends the operation status display control.

On the other hand, the UI control portion 5b executes the process of step S4 when a specific drag operation on the tool tip G4 is detected. The specific drag operation is a drag operation for moving the tool tip G4 along the arrangement direction in the specific area A1.

### <Step S3>

In step S3, the UI control portion 5b selects the operation status presentation screen G1 corresponding to the selection operation on the selection menu G3 from among a plurality of candidate screens.

The UI control portion 5b executes the process of step S1 after executing the process of step S3. In step S1, the UI control portion 5b causes the display device 3b to display the operation status presentation screen G1 selected in step S3.

### <Step S4>

In step S4, the UI control portion 5b executes tool tip movement processing. The tool tip movement processing includes processing for changing the display position of the tool tip G4 in the specific area A1 in the direction of the specific drag operation.

Further, the tool tip movement processing includes processing for changing the display position of the line image G5 in the direction of the specific drag operation.

The UI control portion 5b executes the process of step S5 following the process of step S4.

### <Step S5>

In step S5, the UI control portion 5b identifies a corresponding graph element, which is one of the plurality of graph elements G21 corresponding to the display position of the tool tip G4.

When the identified corresponding graph element is the same as the current target graph element G21x, the UI control portion 5b executes the processes of step S2 and subsequent steps.

On the other hand, when the identified corresponding graph element is not the same as the current target graph element G21x, the UI control portion 5b executes the process of step S6.

### <Step S6>

In step S6, the UI control portion 5b changes the target graph element G21x to the corresponding graph element.

The UI control portion 5b executes the process of step S7 together with the process of step S6.

### <Step S7>

In step S7, the UI control portion 5b changes the display of the tool tip G4 to the display corresponding to the target graph element G21x after the change.

The operation status presentation screen G1 shown in FIG. 4 shows an example of a state in which the display position and the display content of the tool tip G4 in the operation status presentation screen G1 shown in FIG. 3 have been changed by the process of step S7.

In step S7, the UI control portion 5b causes the display device 3b to display the target graph element G21x after the change among the multiple graph elements G21 in an emphasized manner (see FIG. 4).

The UI control portion 5b executes the processes of step S1 and subsequent steps after executing the process of step S7.

As described above, when the specific drag operation is detected by the touch panel 3a, the UI control portion 5b changes the display position of the tool tip G4 in the specific area A1 in the direction of the specific drag operation (step S4).

Further, the UI control portion 5b changes the target graph element G21x to one of the plurality of graph elements G21 corresponding to the display position of the tool tip G4 in accordance with the change in the display position of the tool tip G4 (see steps S5 and S6).

Further, the UI control portion 5b executes the process of step S6 and changes the display of the tool tip G4 to the display corresponding to the target graph element G21x after the change (see step S7).

By the execution of the operation status display control, an outline of the data of the operation status of the image forming apparatus 10 is displayed on the display device 3b as the graph image G2 (see FIG. 3 and FIG. 4).

Further, detailed data corresponding to the target graph element G21x among the data of the operation status is displayed on the display device 3b as the tool tip G4.

Further, only by performing the specific drag operation for moving the tool tip G4 along the arrangement direction, a new target graph element G21x corresponding to the position of the specific drag operation is automatically selected, and the display content of the tool tip G4 is updated to the content corresponding to the new target graph element G21x.

By the execution of the operation status display control, the data of the operation status of the image forming apparatus 10 is displayed in a limited display area of the display device 3b in an easily understandable manner.

### [First Modification of Operation Status Presentation Screen G1]

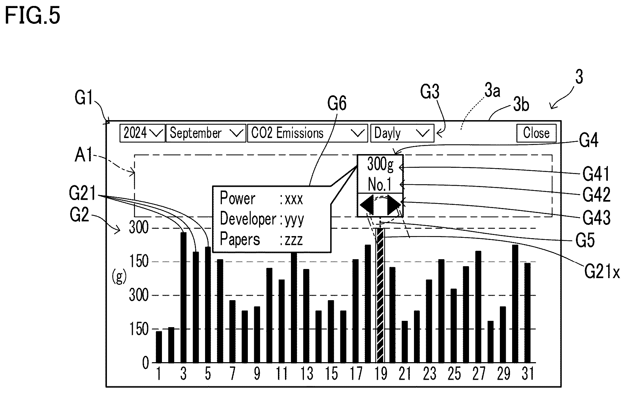

Next, a first modification of the operation status presentation screen G1 will be described with reference to FIG. 5.

The UI control portion 5b may cause the display device 3b to display a related data image G6 when a related display operation is detected by the touch panel 3a in step S2 of the operation status display control (see FIG. 5). The related data image G6 includes text representing related data which is related to the data corresponding to the target graph element G21x in the data of the operation status.

Specifically, the related data is other data having a common attribute with the data corresponding to the target graph element G21x in the data of the operation status.

For example, the related display operation may be a long press operation on the tool tip G4 or a double touch operation on the tool tip G4. In addition, an operation icon for receiving the related display operation may be included in the operation status presentation screen G1 in advance.

In the example shown in FIG. 5, the UI control portion 5b overlays the related data image G6 on a part of the graph image G2.

When the related display operation is detected while the related data image G6 is displayed, the UI control portion 5b turns off the display of the related data image G6.

By employing this modification, the related data is displayed in a limited display area of the display device 3b only when necessary.

### [Second Modification of Operation Status Presentation Screen G1]

Next, a second modification of the operation status presentation screen G1 will be described.

In the present modification, the graph image G2 is an image of a line graph. Similar to the bar graphs shown in FIG. 3 and FIG. 4, the line graph is also a graph in which the X axis represents attributes of data corresponding to the plurality of graph elements G21 and the Y axis represents values of data corresponding to the plurality of graph elements G21.

### [Third Modification of Operation Status Presentation Screen G1]

Next, a third modification of the operation status presentation screen G1 will be described.

In the present modification, the graph image G2 is an image of a pie graph. In the pie graph, the plurality of graph elements G21 are arranged along a circle having predetermined reference coordinates as a center, and a width of each of the plurality of graph elements G21 in a direction along the circle represents a value of data corresponding to each of the plurality of graph elements G21.

For example, when the graph image G2 is an image of a pie graph, the specific area A1 is an annular area along the outer edge of the pie graph.

### [Other]

In the user interface device 3, a mouse, a track ball, or the like may be employed as the operation device for detecting an operation.

In addition, the UI control portion 5b may execute the operation status display control with a host display device, which is a display device provided in the host apparatus 8, as a control target. In this case, the UI control portion 5b controls the display of the host display device through the communication device 4.

Further, the UI control portion 5b acquires the operation content detected by the host operation device, which is an operation device provided in the host apparatus 8, through the communication device 4, and controls the display of the host display device in accordance with the acquired operation content.

It is noted that the host operation device may be a touch panel, a mouse, a track ball, or the like.

Alternatively, the image forming apparatus 10 may transmit the data of the operation status to the host apparatus 8, and a microprocessor provided in the host apparatus 8 may execute the operation status display control. In this case, the microprocessor of the host apparatus 8 implements the operation status display control by executing an application program installed in advance.

### [Appendixes to Disclosure]

The following are appendixes to the overview of the disclosure extracted from the above embodiment. It is noted that the structures and processing functions to be described in the following appendixes can be selected and combined arbitrarily.

### <Appendix 1>

A display control method for controlling display of a display device capable of displaying an image in a target device including the display device and an operation device for detecting an operation, the display control method comprising:
a processor causing the display device to display a graph image in which a plurality of graph elements, each of which is an image representing data of an operation status of the target device, are arranged;
the processor causing a target data image including text relating to the data of the operation status corresponding to a target graph element selected from the plurality of graph elements to be displayed at a position corresponding to the target graph element in a specific area which is a part of an entire display area of the display device;
when a drag operation for moving the target data image in the specific area along an arrangement direction of the plurality of graph elements is detected by the operation device, the processor changing the display position of the target data image in the specific area in a direction of the drag operation; and
the processor changing the target graph element to one of the plurality of graph elements corresponding to the display position of the target data image in accordance with the change in the display position of the target data image; and changing a display of the target data image to a display corresponding to the target graph element after the change.

### <Appendix 2>

The display control method according to Appendix 1, comprising the processor causing the display device to display the target graph element among the plurality of graph elements in an emphasized manner.

### <Appendix 3>

The display control method according to Appendix 1 or 2, wherein the target data image includes a direction display mark indicating that the target data image can be dragged along the arrangement direction.

### <Appendix 4>

The display control method according to any one of Appendixes 1 to 3, wherein the graph image is an image of a bar graph, an image of a line graph, or an image of a pie graph.

### <Appendix 5>

The display control method according to any one of Appendixes 1 to 4, wherein the specific area is an area outside a display area of the graph image.

### <Appendix 6>

The display control method according to any one of Appendixes 1 to 5, comprising the processor causing the display device to display a line image that associates the target data image with the target graph element, and changing a display position of the line image in accordance with a change in the display position of the target data image.

### <Appendix 7>

The display control method according to any one of Appendixes 1 to 6, wherein the target data image includes text representing some or all of a value of the data of the operation status corresponding to the target graph element, data corresponding to the target graph element among a plurality of attribute data corresponding to the plurality of graph elements, and a rank of the value of the data corresponding to the target graph element among a plurality of values of the data of the operation status corresponding to the plurality of graph elements.

### <Appendix 8>

An image forming apparatus comprising:
a printing device configured to form an image on a sheet;
a display device capable of displaying an image;
an operation device configured to detect an operation; and
a processor configured to cause the display device to display an image representing an operation status of a target device including the printing device and implement the display control method according to any one of Appendixes 1 to 7.

### <Appendix 9>

An information processing apparatus comprising:
a display device capable of displaying an image;
an operation device configured to detect an operation; and
a processor configured to implement the display control method according to any one of Appendixes 1 to 7.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. A display control method for controlling display of a display device (3b) capable of displaying an image in a target device including the display device (3b) and an operation device (3a) for detecting an operation, the display control method comprising:
a processor (51) causing the display device (3b) to display a graph image (G2) in which a plurality of graph elements (G21), each of which is an image representing data of an operation status of the target device, are arranged;
the processor (51) causing a target data image (G4) including text relating to the data of the operation status corresponding to a target graph element (G21) selected from the plurality of graph elements (G21) to be displayed at a position corresponding to the target graph element (G21) in a specific area (A1) which is a part of an entire display area of the display device (3b);
when a drag operation for moving the target data image (G4) in the specific area (A1) along an arrangement direction of the plurality of graph elements (G21) is detected by the operation device (3a), the processor (51) changing the display position of the target data image (G4) in the specific area (A1) in a direction of the drag operation; and
the processor (51) changing the target graph element (G21) to one of the plurality of graph elements (G21) corresponding to the display position of the target data image (G4) in accordance with the change in the display position of the target data image (G4), and changing a display of the target data image (G4) to a display corresponding to the target graph element (G21) after the change.

2. The display control method according to claim 1, including the processor (51) causing the display device (3b) to display the target graph element (G21) among the plurality of graph elements (G21) in an emphasized manner.

3. The display control method according to claim 1, wherein the target data image (G4) includes a direction display mark (G43) indicating that the target data image (G4) can be dragged along the arrangement direction.

4. The display control method according to any one of claims 1 to 3, wherein the graph image (G2) is an image of a bar graph, an image of a line graph, or an image of a pie graph.

5. The display control method according to any one of claims 1 to 4, wherein the specific area (A1) is an area outside a display area of the graph image (G2).

6. The display control method according to any one of claims 1 to 5, comprising the processor (51) causing the display device (3b) to display a line image (G5) that associates the target data image (G4) with the target graph element (G21), and changing a display position of the line image (G5) in accordance with a change in a display position of the target data image (G4).

7. The display control method according to any one of claims 1 to 6, wherein the target data image (G4) includes text representing some or all of a value of the data of the operation status corresponding to the target graph element (G21), data corresponding to the target graph element (G21) among a plurality of attribute data corresponding to the plurality of graph elements (G21), and a rank of the value of the data corresponding to the target graph element (G21) among a plurality of values of the data of the operation status corresponding to the plurality of graph elements (G21).

8. An image forming apparatus (10) comprising:
a printing device (1) configured to form an image on a sheet;
a display device (3b) capable of displaying an image;
an operation device (3a) configured to detect an operation; and
a processor (51) configured to cause the display device (3b) to display an image representing an operation status of a target device including the printing device (1) and implement the display control method according to any one of claims 1 to 7.

9. An information processing apparatus (10) comprising:
a display device (3b) capable of displaying an image;
an operation device (3a) configured to detect an operation; and
a processor (51) configured to implement the display control method according to any one of claims 1 to 7.
